# EUROPEAN PATENT SPECIFICATION

(11) **EP 0 310 003 B1**
(45) Date of publication and mention of the grant of the patent: **22.11.1995**
(21) Application number: 88115911.5
(22) Date of filing: 27.09.1988
(51) Int. Cl.: G06F 9/44

(54) **Element checking system for use in forward inference system**
In einem Vorderinferenzsystem verwendetes Elementprüfsystem
Système de vérification d'élements utilisés dans un système d'inférene à l'avance

(30) Priority: 30.09.1987 JP 248547/87
(43) Date of publication of application: 05.04.1989
(73) Proprietor: SHARP KABUSHIKI KAISHA, Osaka 545 (JP)
(72) Inventor: Tanaka, Toshiyuki, Yamatokoriyama-shi Nara-ken (JP); Kuga, Shigeki, Nara-shi Nara-ken (JP); Nakamura, Nobuo, Yamatokoriyama-shi Nara-ken (JP); Morishita, Taro, Soraku-gun Kyoto-fu (JP); Wada, Masahiro, Nara-shi Nara-ken (JP)
(74) Representative: TER MEER STEINMEISTER & PARTNER GbR

(56) References cited:
- ARTIFICIAL INTELLIGENCE vol. 19, no. 1, 1982, AMSTERDAM, NETHERLANDS pages 17-37; CHARLES L. FORGY: 'Rete: A Fast Algorithm for the Many Pattern/Many Object Pattern Match Problem*'
- PROC. FIFTH INT. CONF. ON ARTIFICIAL INTELLIGENCE 11 August 1986,MORGAN KAUFMAN, LOS ALTOS, CA, USA pages 226-232; SCHOR, M.I. ET AL.:'Advances In RETE pattern matching'

## Description

The present invention relates to a forward inference system processed by a computer and, more particularly, to an improved element checking system for checking different elements which are used in the forward inference system, and a method therefor.

The forward inference system is developed, for example, for production system which makes a decision based on number of known facts which are stored as elements stored in a working memory in a computer. The decision which is made by the forward inference system is to produce a new fact in a form of new element which is added to the working memory, or to delete or revise a particular fact, i.e., element, from the working memory, or to start a new program or to produce an alarm, or any other system control which the computer may perform.

Before describing the production system, the element carrying a fact is explained first. Each element consists of an element name and one or more pairs of attribute and value. Two examples of the element are shown below.
Ape (Place: $ Room)
Thing (Name: Banana, Place: $ Room)

The first example has the element name Ape and one attribute-value pair. The attribute is Place and its value is $ Room. Here, the symbol $ indicates that the value is variable. This element tells, for example, a fact that "an ape is in the room", according to the previously determined interpreting rule.

The second example has the element name Thing and two attribute-value pairs. In the first attribute-value pair, the attribute is Name and its value is Banana. In the second attribute-value pair, the attribute is Place and its value is $ Room. This element tells, for example, a fact that "a thing in the room is banana", according to the previously determined interpreting rule.

A production system program consists of If-Then statements called production rules. An example of the production rule, which is called "Ape Eats Banana", is shown below.

If facts given by the following elements
Ape (Place: $ Room)
Thing (Name: Banana, Place: $ Room)
are satisfied, then, make a new fact given by the following element
Status (Movement: eat, Thing: banana).
The newly produced element tells, for example, a fact that "banana is eaten". Thus the "Ape Eats Banana" production rule can be interpreted such that, when the conditions "an ape is in the room" and "a thing in the room is banana" are satisfied, it is inferred that "banana is eaten". The inferred fact is then added to the working memory to further infer some other new fact or some new step.

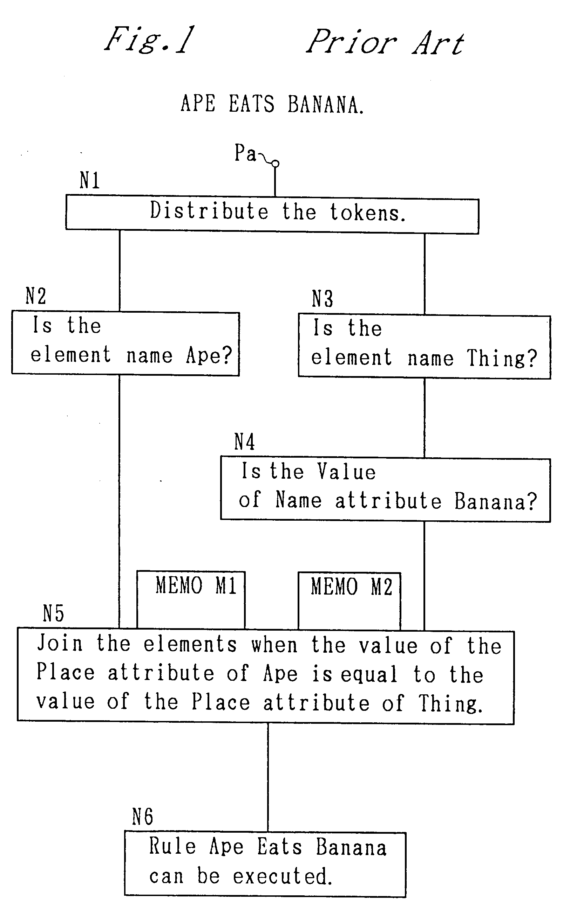

In order to prosecute the production rule, elements are checked by a network having nodes linked together. The prior art network for the production rule, Ape Eats Banana, is shown in Fig. 1. The elements taken out from the working memory and passed into the network are called tokens. The network shown in Fig. 1 consists of: distribution node N1 which has one input Pa for receiving tokens one at a time and a plurality of outputs, such as two output in the case shown in Fig. 1; element name check nodes N2 and N3 for checking the element name; attribute check node N4; value check node N5; and terminal node N6. During the check process in the network, many features of the element art checked. The features can be divided into two classes. The first class, which is called intra-element features, are the ones that involve only one element. In the above example of Fig. 1, nodes N2, N3 and N4 are provided to check the intra-element features. The second class, which is called inter-element features, are the ones that involve two or more elements. In Fig. 1, node N5 is provided to check the inter-element feature. Therefore, node N5 is coupled with memories M1 and M2 for storing codes representing the elements which have arrived at Node N5 from nodes N2 and N4, respectively.

In operation, the distribution node N1 receives a token through input Pa from the working memory and distributes it to element name check node N2 at which it is checked whether the element name is Ape or not. If not, the token is rejected and send back to distribution node N1 which then sends the token to next element name check node N3. The element name check is carried out until the correct name of the applied token is found. When the correct element name of the applied token is not found, the token is expelled from the network, and the next token enters the network.

If the entered token has the element name, Ape, the token is transferred from node N1 to node N2 and further to node N5 at which a code representing the element Ape is stored in memory M1 and then, the token is expelled from the network since there is no element Thing stored therein to carry out the check of node N5.

If the next entered token has the element name, Thing, the token is transferred through nodes N1, N2, N1, N3, N4 and N5. At node N5, a code representing the element Thing is stored in memory M2 and then, it is checked whether or not the value of the Place attribute of the element Ape, which is called by the code stored in memory M1, is equal to the value of the Place attribute of the element Thing. When these Place attributes have the same value, such as $ Room, these elements are joined so as to enable the execution of the production rule "Ape Eats Banana". If a new element is produced by the execution of the production rule, it is added to the working memory and is checked through the networks for checking various rules.

Thus, according to the prior art forward inference system, the element check is carried out such that, in the first level (node N1) of the network, the token is distributed sequentially to different element name check nodes, and in the second level (nodes N2 and N3) of the network, the name of the distributed token is checked one at a time. In the third level (nodes N4 and N5) of the network, the attribute and its value, if any, are checked. In the fourth level (node N6) of the network, a decision is made so as to execute the production rule.

According to the prior art element checking system, there is such a disadvantage that it takes a long time before the network produces a decision. Particularly, the execution carried out in the first level takes long, because even the tokens which do not have the corresponding element name in the second level are also executed.

An element checking system according to the preamble of appended claim 1, and an element checking method according to the preamble of appended claim 6 are known from an article by C. L. Forgy having the title "Rete: A Fast Algorithm for the Many Pattern/Many Object Pattern Match Problem", published in Artificial Intelligence 19 (1982), pages 17 - 37. It is a system and a method as described above based on Fig. 1, i. e. a system having a root or top node, nodes to perform intra-element tests, nodes to perform inter-element tests, and terminal nodes.

It is the object of the invention to provide an element checking system and an element checking method for use in a forward inference system, which can execute a check through a network in a period shorter than needed by prior art systems or methods, respectively.

The element checking system of the invention is defined by the teaching of appended claim 1, whereas the element checking method of the invention is defined by the teaching of appended claim 6.

According the present invention, the element checking system comprises means for storing element checking network, which has a plurality of inputs for receiving the tokens one at a time, and a plurality of nodes for checking features of the received token. The element checking system further comprises means for storing elements, each element carrying data identifying a particular node from which the checking procedure in the networks starts.

Also, according to the present invention, element checking method comprises the steps of storing element checking network, which network has a plurality of inputs for receiving the tokens one at a time, and a plurality of nodes for checking features of the received token, the step of storing elements, each element carrying data identifying a particular node from which the checking procedure in the networks starts, and the step of sending each token to the particular node in said network to start check the token.

These and other objects and features of the present invention will become apparent from the following description taken in conjunction with a preferred embodiment thereof with reference to the accompanying drawings, throughout which like parts are designated by like reference numerals, and in which:
Fig. 1 is a diagrammatic view of the element checking network according to the prior art;
Fig. 2 is a diagrammatic view of the element checking network according to the present invention;
Fig. 3 is a diagrammatic view of a working pattern memory;
Fig. 4 is a diagrammatic view of a working element memory; and
Fig. 5 is a view similar to Fig. 4, but showing a modification thereof.

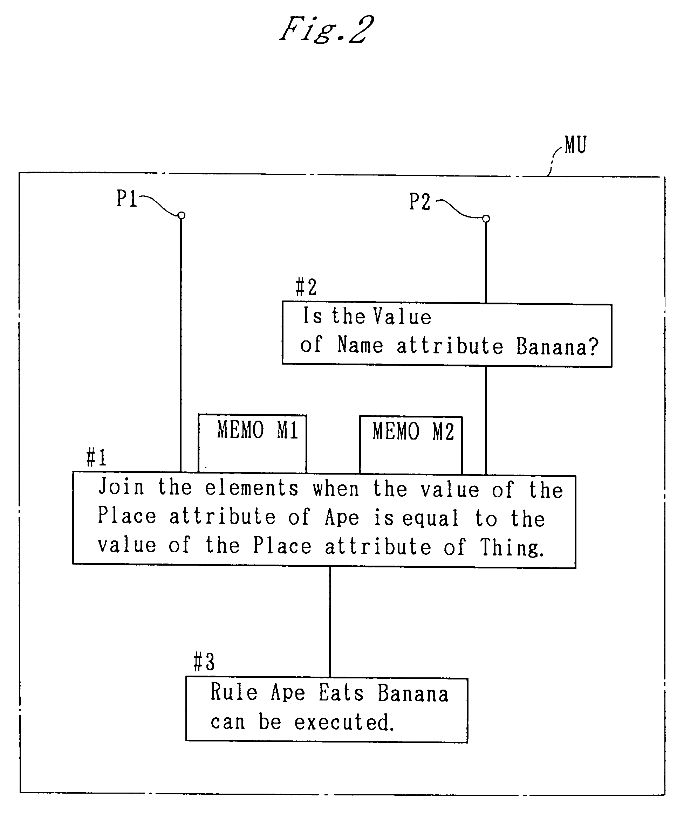

Referring to Fig. 2, an element checking network according to the present invention is shown, which is for the production rule, Ape Eats Banana, explained above. The network shown in Fig. 2 consists of: value check node #1 having one input P1 for receiving a token from the working memory; attribute check node #2 having one input P2 for receiving a token from the working memory; and terminal node #3. When compared with the prior art checking network of Fig. 1, the checking network of Fig 2 does not have the distribution node N1 or the element name check nodes N2 and N3 for checking the element name. But instead, the checking network according to the present invention has a plurality of inputs, such as two inputs P1 and P2 shown in Fig. 2. It is to be noted that the element checking network as shown in Fig. 2 is stored in a memory unit MU in a computer.

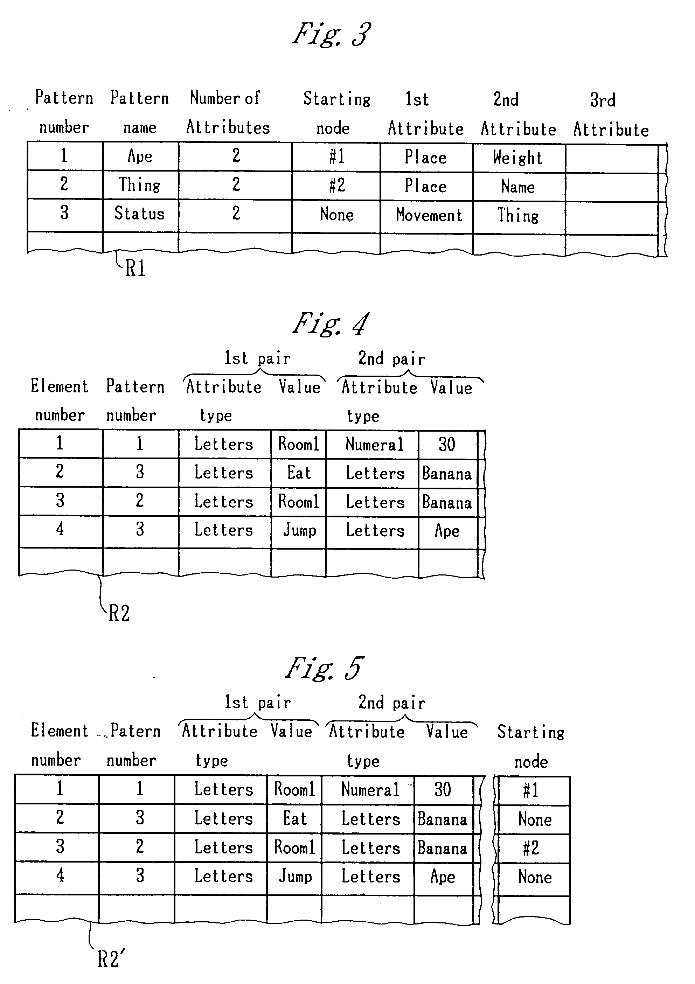

Before starting the check process in the network, a number of elements are prepared and stored in a working memory R2, such as defined by RAM, having column to store various data, as shown in Fig. 4. Each element is formed in accordance with a particular pattern which is stored in memory R1 shown in Fig. 3.

Referring to Fig. 3, memory R1, such as defined by RAM, is shown which is previously stored with various patterns of the elements. In the example shown in Fig. 3, patterns for the elements Ape, Thing and Status, which are already explained above, are stored. In the first column, pattern numbers are given in serial numbers, and in the second column, pattern names are given, such as Ape, Thing and Status. It is to be noted that the different patterns have different pattern names. In the third column, number of attributes are given and in the fourth column, starting node number is given. In the fifth column, the first attribute name is given, and in the subsequent columns, further attribute names are given.

Thus, by the data stored in memory R1, it is understood that the element Ape always has two attributes, Place and Weight, and that it always starts from node #1 in the network of Fig. 2 for the check process. Similarly, the element Thing has two attributes, Place and Name, and its starting point for the check process in the network of Fig. 2 is node #2, and the element Status has two attributes, Movement and Thing, and its starting point is none, meaning that this element will not be checked through the network.

Based on the observed facts, the operator stores elements in working memory R2 shown in Fig. 4. For example, when the operator sees a 30 kg ape in a room, he inputs the data in a computer which will be stored as an element Ape in the working memory R2 in Fig. 4. The data stored in memory R2, first row, indicates that the inputted element is the first element having an element pattern number 1, and that the first attribute type is expressed in letters such that its value being room 1, and the second attribute type is expressed in numeral such that its value being 30. The data in working memory R2 may be produced by way of external input operation, such as by key input, or by way of internal input operation, such as by the result of proceeding the production rule.

The first, second, third and fourth elements stored in the working memory R2 can be generally expressed as follows.
Ape (Place: $ Room 1, weight: 30 kg)
Status (Movement: Eat, Thing: banana)
Thing (Place: $ Room 1, Name: banana)
Status (Movement: Jump, Thing: Ape).

When these elements are needed to be checked through the network of Fig. 2, the data stored in memory R1 informs the position in the network where to start the check process. For example, when the element number 1 is read out as a token and is to be applied to the network, it is directly applied to node #1 through input P1, because the data stored in memory R1 informs that the element Ape should start from node #1. Similarly, when the element number 2 is read out as a token and is to be applied to the network, it is expelled without entering the network, because the data stored in memory R1 informs that the element Status needs not be checked. Furthermore, when the element number 3 is read out as a token and is to be applied to the network, it is directly applied to node #2 through input P2, because the data stored in memory R1 informs that the element Thing should start from node #2.

The token which has entered the network is checked in the same manner described above in connection with Fig. 1. More specifically, if the entered token has the element name, Ape, the token is applied directly through input P1 to node #1 at which a code representing the element Ape is stored in memory M1 and then, the token is expelled from the network since there is no element Thing stored therein to carry out the check of node N5.

If the next entered token has the element name, Thing, the token is applied directly through input P2 to node #2 at which the attribute type is checked. If the value of Name attribute is Banana, the token is further transferred to node #1, at which a code representing the element Thing is stored in memory M2 and then, it is checked whether or not the value of the Place attribute of the element Ape, which is called by the code stored in memory M1, is equal to the value of the Place attribute of the element Thing. When these Place attributes have the same value, such as $ Room 1, these elements are joined so as to enable the execution of the production rule "Ape Eats Banana". If a new element is produced by the execution of the production rule, it is added to the working memory R2 and is checked through the networks for checking various rules.

Thus, according to the forward inference system of the present invention, the element check is carried out such that the token enters the network directly to the node for checking the attribute name or attribute value. There is no node for distributing the token or nodes for finding the correct element name. Thus, by the element checking system of the present invention, it takes very short time for the network to produce a decision, resulting in fast forward inference procedure.

Referring to Fig. 5, a modification of the working memory R2′ is shown which has another column, such as shown at the right hand side end in Fig. 5, for storing the node number from which the token should enter the network. When working memory R2′ is used, it is not necessary to refer to memory R1 to obtain data for the starting node number.

## Claims

1. An element checking system for use in a forward inference system.for checking elements when each element is read out as a token and transmitted through a checking network, said element checking system comprising:
means (MU) for storing an element checking network, said network having a plurality of inputs (P1, P2) for receiving the tokens one at a time, and a plurality of nodes (#1, #2) for checking features of the received token; and
means (R1; R2′) for storing elements, and for storing for each element data identifying a particular node (#1, #2) from which the checking procedure in the networks starts.

2. An element checking system as claimed in claim 1 wherein each of said elements is defined by an element name (e.g. thing) and one or more pairs of attribute (e.g. name) and value (e.g. banana), and wherein said nodes comprises nodes (#2) for checking the attribute name and/or attribute value.

3. An element checking system as claimed in claim 1, wherein said storing means comprises first memory means (R1) for storing patterns of various elements and second memory means (R2) for storing specific elements with specific attribute and specific value.

4. An element checking system as claimed in claim 3, wherein said data identifying a particular node (#1, #2) is stored in said first memory means (R1).

5. An element checking system as claimed in claim 3, wherein said data identifying a particular node (#1, #2) is stored in said second memory means (R2′).

6. An element checking method for use in a forward inference system for checking elements when each element is read out as a token and transmitted through a checking network, said element checking method comprising the steps of:
storing a element checking network, said network having a plurality of inputs (P1, P2) for receiving the tokens one at a time, and a plurality of nodes (#1, #2) for checking features of the received token;
storing elements, and storing for each element data identifying a particular node from which the checking procedure in the networks starts; and
sending each token to said particular node in said network to start to check said token, which particular node is identifyed by the node identifying data within said token.

## Patentansprüche

1. Elementprüfsystem zur Verwendung in einem Vorwärtsinferenzsystem, zum Überprüfen von Elementen, wenn jedes Element als Token ausgelesen und über ein Prüfnetzwerk übertragen wird, mit:
- einer Einrichtung (MU) zum Einspeichern eines Elementprüfung-Netzwerks, das mehrere Eingänge (P1, P2) zum gleichzeitigen Empfangen von Token und mehrere Knoten (#1, #2) zum Überprüfen von Merkmalen der empfangenen Token aufweist; und
- einer Einrichtung (R1; R2′) zum Einspeichern von Elementen und zum Einspeichern eines Datenwerts für jedes Element, der den speziellen Knoten (#1, #2) kennzeichnet, von dem aus der Prüfablauf im Netzwerk beginnt.

2. Elementprüfsystem nach Anspruch 1, bei dem jedes der Elemente durch einen Elementnamen (z. B. Ding) und ein Paar oder mehrere aus einem Attribut (z. B. Name) und einem Wert (z. B. Banane) definiert ist, und bei dem zu den Knoten Knoten (#2) zum Überprüfen des Attributnamens und/oder des Attributwerts gehören.

3. Elementprüfsystem nach Anspruch 1, bei dem die Speichereinrichtung eine erste Speichereinrichtung (R1) zum Einspeichern von Mustern verschiedener Elemente und eine zweite Speichereinrichtung (R2) zum Einspeichern spezifischer Elemente mit spezifischem Attribut und spezifischem Wert aufweist.

4. Elementprüfsystem nach Anspruch 3, bei dem der einen speziellen Knoten (#1, #2) kennzeichnende Datenwert in der ersten Speichereinrichtung (R1) abgespeichert ist.

5. Elementprüfsystem nach Anspruch 3, bei dem der einen speziellen Knoten (#1, #2) kennzeichnende Datenwert in der zweiten Speichereinrichtung (R2′) abgespeichert ist.

6. Elementprüfverfahren zur Verwendung in einem Vorwärtsinferenzsystem, zum Überprüfen von Elementen, wenn jedes Element als Token ausgelesen und über ein Prüfnetzwerk übertragen wird, mit den folgenden Schritten:
- Abspeichern eines Elementprüfung-Netzwerks, das mehrere Eingänge (P1, P2) zum gleichzeitigen Empfangen von Token und mehrere Knoten (#1, #2) zum Überprüfen von Merkmalen der empfangenen Token aufweist;
- Abspeichern von Elementen und Abspeichern, für jedes Element, eines Datenwerts, der den speziellen Knoten kennzeichnet, ab dem der Prüfablauf im Netzwerk beginnt; und
- Liefern jedes Tokens an den speziellen Knoten im Netzwerk, um die Prüfung dieses Tokens zu beginnen, wobei der spezielle Knoten durch den den Knoten kennzeichnenden Datenwert innerhalb des Tokens gekennzeichnet ist.

## Revendications

1. Système de vérification d'éléments à utiliser dans un système à inférence d'avance pour vérifier des éléments lorsque chaque élément est lu comme un jeton et émis à travers un réseau de vérification, ledit système de vérification d'éléments comprenant :
des moyens (MU) pour mémoriser un réseau de vérification d'éléments, ledit réseau ayant une pluralité d'entrées (P1, P2) pour recevoir les jetons un par un, et une pluralité de noeuds (#1, #2) pour vérifier les particularités du jeton reçu ; et
des moyens (R1 ; R2) pour mémoriser des éléments et pour mémoriser pour chaque élément des données identifiant un noeud particulier (#1, #2) à partir duquel la procédure de vérification dans les réseaux démarre.

2. Système de vérification d'éléments selon la revendication 1, dans lequel chacun desdits éléments est défini par un nom d'élément (par exemple : chose) et par une ou plusieurs paires d'attribut (par exemple : nom) et de valeur (par exemple : banane), et dans lequel lesdits noeuds comprennent des noeuds (#2) pour vérifier le nom de l'attribut et/ou la valeur de l'attribut.

3. Système de vérification d'éléments selon la revendication 1, dans lequel ledit moyen de mémorisation comprend un premier moyen de mémorisation (R1) pour mémoriser des combinaisons de différents éléments et un second moyen de mémorisation (R2) pour mémoriser des éléments spécifiques avec un attribut et une valeur spécifiques.

4. Système de vérification d'éléments selon la revendication 3, dans lequel lesdites données identifiant un noeud particulier (#1, #2) sont mémorisées dans ledit premier moyen de mémorisation (R1).

5. Système de vérification d'éléments selon la revendication 3, dans lequel lesdites données identifiant un noeud particulier (#1, #2) sont mémorisées dans ledit second moyen de mémorisation (R2).

6. Procédé de vérification d'éléments à utiliser dans un système à inférence d'avance pour vérifier des éléments lorsque chaque élément est lu comme un jeton et émis à travers un réseau de vérification, ledit procédé de vérification d'éléments comprenant les étapes :
de mémorisation d'un réseau de vérification d'éléments, ledit réseau ayant une pluralité d'entrées (P1, P2) pour recevoir les jetons un par un, et une pluralité de noeuds (#1, #2) pour vérifier les particularités du jeton reçu ;
de mémorisation d'éléments et de mémorisation pour chaque élément de données identifiant un noeud particulier à partir duquel la procédure de vérification dans les réseaux démarre ; et
d'envoi de chaque jeton vers ledit noeud particulier dans ledit réseau pour commencer à vérifier ledit jeton, lequel noeud particulier est identifié par les données d'identification de noeud à l'intérieur dudit jeton.
